# EUROPEAN PATENT SPECIFICATION

(11) **EP 2 374 632 B1**
(45) Date of publication and mention of the grant of the patent: **16.01.2013**
(21) Application number: 10158549.5
(22) Date of filing: 30.03.2010
(51) Int. Cl.: B60B 5/02, B60B 21/08

(54) **Bicycle wheel**
Fahrradlaufrad
Roue de bicyclette

(43) Date of publication of application: 12.10.2011
(73) Proprietor: Carbotec Industrial Co., Ltd, 407 Taichung (TW)
(72) Inventor: Lee, Michael, Taichung City 407 (TW)
(74) Representative: Lang, Christian

(56) References cited:
- WO-A1-86/01463
- DE-A1- 10 006 151
- DE-A1- 19 729 891
- DE-A1-102005 053 799
- JP-A- 7 032 806
- US-A- 5 246 275

## Description

### BACKGROUND OF THE INVENTION

### Field of the Invention

The present invention relates to a bicycle wheel, and more particularly to a composite bicycle wheel with braking surfaces being located on opposite flanges of the rim. Such a wheel is known from WO 86/01463 A that forms the closest prior art.

### Description of the Prior Art

V-brake is a popular braking system for bicycle wheels and is advantageous in light weight and low cost. The V-brake can clamp the braking surfaces of the wheels to decelerate the bicycle. However, the V-brake can overheat the braking surfaces, leading to deformation of the wheels and/or flat the tire.

Therefore, the present invention has arisen to resolve or at least mitigate the above mentioned disadvantages.

### SUMMARY OF THE INVENTION

The main object of the present invention is to provide a bicycle wheel with heat-resist braking surfaces.

To achieve the above and other objects, the bicycle wheel of the present invention is made of composite material and has two opposite braking surfaces, each of which is coated with a fluoride polymer layer. Specifically, the braking surfaces are sand blasted to remove a releasing agent layer coated on the wheel. The wheel is, thereafter, placed in a spraying machine at about 100 degree Celsius and then the braking surfaces are spray-coated with a material selected from the group consisting of polytetrafluoro ethylene, fluoride ethylene-propylene copolymer, polyfluoroalkyl, ethylene-tetrafluoro ethylene copolymer and the mixture thereof until a thickness of the material is bigger than 0.4 cm. Thereafter, the wheel is gradually heated to make the material set and form the fluoride polymer layers.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective drawing showing a bicycle wheel of the present invention;
Fig. 2A is a partial perspective drawing showing a bicycle wheel frame of the present invention;
Fig. 2B is a partial perspective drawing showing a bicycle wheel frame coated with fluoride polymer layer of the present invention;
Fig. 3 is a profile of Fig. 2B;
Fig. 4 is a profile showing another bicycle wheel of the present invention.

### DETAILED DESCRIPTION OF THE PREFERRED EMBODIMENTS

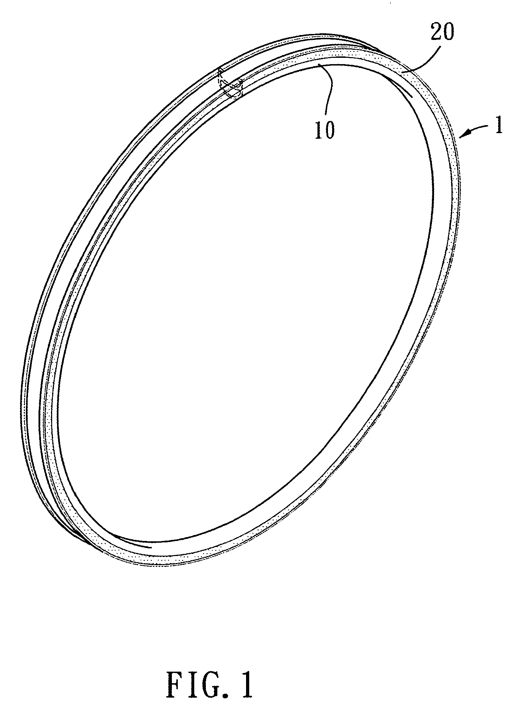

Please refer to Fig. 1. The bicycle wheel 1 of the present invention is made of composite material such as carbon fiber, glass fiber or Kevlar fiber and has two opposite braking surfaces 10, which can be clamped by a V-brake to decelerate. Each braking surface 10 is coated with a fluoride polymer layer 20.

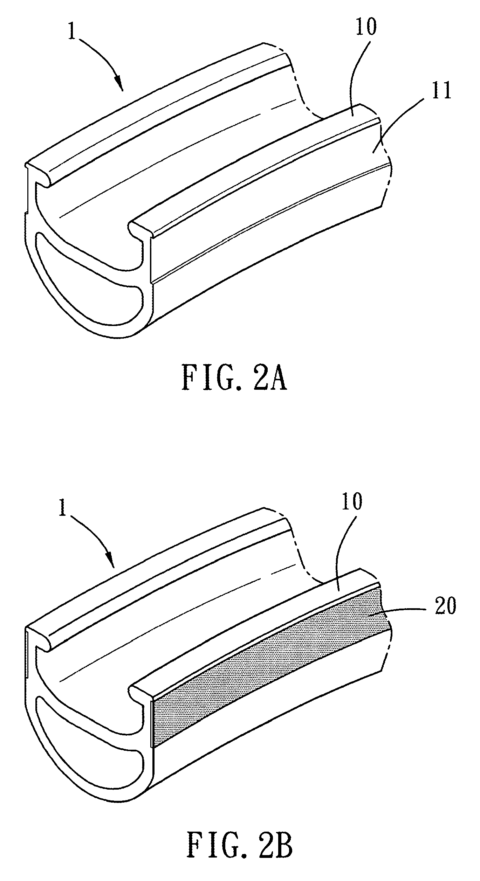

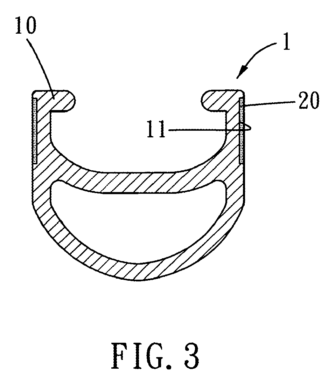

Please refer to Fig. 2A, Fig. 2B and Fig. 3. In the present embodiment, the braking surfaces 10 are formed with a groove 11 respectively, and the fluoride polymer layers 20 are coated in the grooves 11. Because the wheel is made of composite material, a releasing agent layer is coated on outer surfaces thereof. As such, the braking surfaces 10 are sand blasted to remove the releasing agent and then are preferably polished to become smooth. Thereafter, the wheel 1 is placed in a spraying machine at about 100 degree Celsius and then braking surfaces 10 are spray-coated with a material selected from the group consisting of polytetrafluoro ethylene, fluoride ethylene-propylene copolymer, polyfluoroalkyl, ethylene-tetrafluoro ethylene copolymer and the mixture thereof until a thickness of the material is bigger than 0.4 cm, preferably between 0.5-0.6 cm. To reach said thickness, the braking surfaces are preferably spray-coated for several times, e.g. twice or three times, and time intervals are given between each two spray-coating procedures. Specifically, the material and the wheel are both pre-heated to 100 degree Celsius, so that the material can be easily coated on the braking surfaces 10. Thereafter, the wheel is gradually heated to make the material set and form the fluoride polymer layers 20. More specifically, the wheel coated with the material is placed in a heating device, e.g. the spraying machine or an oven, and stays at 100 degree Celsius for 30 minutes, then the wheel is heated to 110 degree Celsius for 10 minutes, then the wheel is heated to 120 degree Celsius for 35 minutes, then the wheel is heated to 140 degree Celsius for 40 minutes, then the wheel is heated to 160 degree Celsius for 30 minutes, then the wheel is finally heated to 180 degree Celsius for 60 minutes to form the fluoride polymer layers 20.

It is to be noted that if the wheel is heated to 180 degree Celsius rapidly, the fluoride polymer layers 20 will bubble, which leads to insufficient structural strength and aesthetic defects, as well as the fact that the layers 20 may tend to delaminate from the braking surfaces 10.

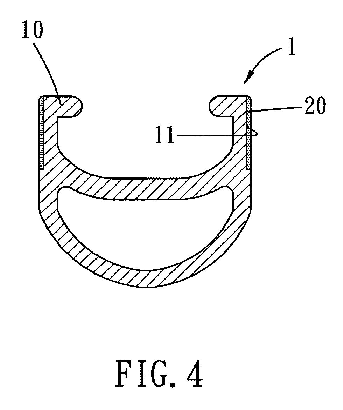

As shown in Fig. 4, the braking surfaces 10 may also be stepped for the fluoride polymer layers 20 to coat thereon. Also, the braking surfaces can be flat without grooves or stepped structures.

After the fluoride polymer layers 20 are formed, the wheel 1 has an outer surface consisting of a fluoride polymer containing area and a fluoride polymer non-containing area. The fluoride polymer non-containing area further undergoes a surface treatment procedure, such as patching-up, polishing and varnishing. Note that if the surface treatment is made before the coating of the fluoride polymer layers, the patching material and the vanish may be deteriorated and melt, causing other aesthetic disadvantages.

The fluoride polymer layers 20 can increase the heat-resistance of the braking surfaces. Further, the fluoride polymer layers mixed with titanium metal powder can further elevate the heat-resisting performance and the mechanical strength of the layers.

A result of a braking test is shown in the following Table 1, in which each wheel is driven to rotate and then clamped to stop 3000 times. Thereafter the surface temperature on the braking surface is measured in the unit of degree Celsius:

**Table 1**

| | Fans on | Fans off |
|---|---|---|
| Wheel coated with fluoride polymer layers | 70-80 | 100-120 |
| Wheel without fluoride polymer layers | 90-120 | 140-160 |

As shown in Table 1, the surface temperature of the wheel of the present invention is lower than that of the wheel without fluoride polymer layers, no matter the fans are turned on or not. Accordingly, the wheel of the present invention can mitigate the problem resulted from over-heated braking surfaces, thus the safety performance of the bicycle using the wheel of the present invention can be elevated.

## Claims

1. A bicycle wheel (1), being made of composite material and having two opposite braking surfaces (10), each of which is coated with a fluoride polymer layer (20);
wherein the braking surfaces (10) are sand blasted to remove a releasing agent layer coated on the wheel (1), thereafter the wheel (1) is placed in a spraying machine at about 100 degree Celsius and then the braking surfaces (10) are spray-coated with a material selected from the group consisting of polytetrafluoro ethylene, fluoride ethylene-propylene copolymer, polyfluoroalkyl, ethylene-tetrafluoro ethylene copolymer and the mixture thereof until a thickness of the material is bigger than 0.4 cm, thereafter the wheel is gradually heated to make the material set and form the fluoride polymer layers (20).

2. The bicycle wheel of claim 1, wherein after the braking surfaces (10) are sand blasted, the braking surfaces (10) are polished to become smooth.

3. The bicycle wheel of claim 1, wherein the material is heated to 100 degree Celsius and spay-coated on the braking surfaces (10), which have been heated to 100 degree Celsius, at least twice.

4. The bicycle wheel of claim 1, wherein after the material is coated on the braking surfaces (10), the wheel (1) stays at 100 degree Celsius for 30 minutes, then the wheel (1) is heated to 110 degree Celsius for 10 minutes, then the wheel (1) is heated to 120 degree Celsius for 35 minutes, then the wheel (1) is heated to 140 degree Celsius for 40 minutes, then the wheel (1) is heated to 160 degree Celsius for 30 minutes, then the wheel (1) is heated to 180 degree Celsius for 60 minutes to form the fluoride polymer layers (20).

5. The bicycle wheel of claim 1, wherein after the fluoride polymer layers (20) are formed, the wheel (1) has an outer surface consisting of a fluoride polymer containing area and a fluoride polymer non-containing area, the fluoride polymer non-containing area further undergoes a surface treatment procedure.

6. The bicycle wheel (1) of claim 1, wherein the material is mixed with titanium metal.

## Patentansprüche

1. Fahrradfelge (1), das aus einem Verbundmaterial hergestellt ist und das zwei gegenüberliegende Bremsoberflächen (10) umfasst, von denen jede mit einer Fluoridpolymerschicht (20) beschichtet ist,
wobei die Bremsoberflächen (10) sandgestrahlt werden, um eine Trennmittelschicht, die auf das Felge (1) aufgetragen ist, zu entfernen, wobei danach das Felge (1) bei ungefähr 100 Grad Celsius in einer Spritzmaschine platziert ist und dann werden die Bremsoberflächen (10) mit einem Material spritzbeschichtet, das aus der Gruppe ausgewählt wurde, die aus Polytetrafluorethylen, Fluorethylenpropylencopolymer, Polyfluoralkyl, Ethylentetrafluorethylen - Copolymer und den Mischungen daraus besteht, bis eine Dicke des Materials größer als 0.4 cm ist, danach wird die Felge allmählich erhitzt, um das Material zu festigen und die Fluorpolymerschichten (20) auszubilden.

2. Fahrradfelge nach Anspruch 1, bei der, nachdem die Bremsoberflächen (10) sandgestrahlt sind, die Bremsoberflächen (10) poliert werden, um glatt zu werden.

3. Fahrradfelge nach Anspruch 1, bei der mindestens zweimal das Material auf 100 Grad Celsius erhitzt wird und auf die Bremsoberflächen (10) spritzbeschichtet wird, die auf 100°C erhitzt worden sind.

4. Fahrradfelge nach Anspruch 1, bei der, nachdem das Material auf die Bremsoberfläche (10) aufgebracht ist, die Felge (1) 30 Minuten auf 100 Grad Celsius gehalten wird, anschließend die Felge (1) für 10 Minuten auf 110 Grad Celsius erhitzt wird, anschließend die Felge (1) für 35 Minuten auf 120 Grad Celsius erhitzt wird, anschließend die Felge (1) für 40 Minuten auf 140 Grad Celsius erhitzt wird, anschließend die Felge (1) für 30 Minuten auf 160 Grad Celsius erhitzt wird, anschließend die Felge (1) für 60 Minuten auf 180 Grad Celsius erhitzt, um die Fluorpolymerschichten (20) auszubilden.

5. Fahrradfelge nach Anspruch 1, bei der, nachdem die Fluorpolymerschichten (20) ausgebildet sind, die Felge (1) eine äußere Oberfläche aufweist, die aus einem Fluorpolymer enthaltenden Bereich und einem kein Fluorpolymer enthaltenden Bereich besteht, wobei der kein Fluorpolymer enthaltende Bereich weiter einem Oberflächenbehandlungsvorgang unterzogen wird.

6. Fahrradfelge nach Anspruch 1, wobei das Material mit Titanmetall vermischt ist.

## Revendications

1. Roue de bicyclette (1) étant faite en un matériau composite et ayant deux surfaces de freinage opposées (10), chacune d'elles étant revêtue avec une couche de polymère fluoré (20),
dans laquelle les surfaces de freinage (10) sont décapées par sablage pour enlever une couche d'agent de décollage revêtue sur la roue (1), ce après quoi la roue (1) est placée dans une machine de pulvérisation à environ 100 degrés Celsius et les surfaces de freinage (10) sont ensuite revêtues par pulvérisation avec un matériau sélectionné dans le groupe comprenant le polytétrafluoroéthylène, un copolymère fluoré d'éthylène propylène, un groupe polyfluoroalkyle, un copolymère d'éthylène et de tétrafluoroéthylène et le mélange de ceux-ci jusqu'à ce qu'une épaisseur du matériau soit supérieure à 0,4 cm, ce après quoi la roue est graduellement chauffée pour que le matériau se solidifie et forme les couches de polymère fluoré (20).

2. Roue de bicyclette selon la revendication 1 dans laquelle, après que les surfaces de freinage (10) aient été décapées par sablage, les surfaces de freinage (10) sont polies pour devenir plus lisses.

3. Roue de bicyclette selon la revendication 1 dans laquelle le matériau est chauffé à 100 degrés Celsius et revêtu par pulvérisation sur les surfaces de freinage (10) qui ont été chauffées à 100 degrés Celsius, au moins deux fois.

4. Roue de bicyclette selon la revendication 1 dans laquelle, après que le matériau ait été revêtu sur les surfaces de freinage (10), la roue (1) reste à 100 degrés Celsius pendant 30 minutes, ensuite la roue (1) est chauffée à 110 degrés Celsius pendant 10 minutes, ensuite la roue (1) est chauffée à 120 degrés Celsius pendant 35 minutes, ensuite la roue (1) est chauffée à 140 degrés Celsius pendant 40 minutes, ensuite la roue (1) est chauffée à 160 degrés Celsius pendant 30 minutes, ensuite la roue (1) est chauffée à 180 degrés Celsius pendant 60 minutes pour former les couches de polymère fluoré (20).

5. Roue de bicyclette selon la revendication 1 dans laquelle, après que les couches de polymère fluoré (20) aient été formées, la roue (1) a une surface extérieure qui consiste en une zone contenant un polymère fluoré et une zone non contenant un polymère fluoré, la zone non contenant de polymère fluoré subissant une procédure de traitement de surface.

6. Roue de bicyclette (1) selon la revendication 1 dans laquelle le matériau est mélangé au métal titane.
